Europäisches Patentamt

European Patent Office

Office européen des brevets

(11) Veröffentlichungsnummer: **0 401 374**
**A1**

## EUROPÄISCHE PATENTANMELDUNG
### veröffentlicht nach Art. 158 Abs. 3 EPÜ

(21) Anmeldenummer: 89905573.5

(51) Int. Cl.$^5$: **C22C 1/05**

(22) Anmeldetag: **20.12.88**

(86) Internationale Anmeldenummer:
**PCT/SU88/00270**

(87) Internationale Veröffentlichungsnummer:
**WO 90/07014 (28.06.90 90/15)**

(43) Veröffentlichungstag der Anmeldung:
**12.12.90 Patentblatt 90/50**

(84) Benannte Vertragsstaaten:
**AT CH DE FR GB IT LI NL SE**

(71) Anmelder: **INSTITUT STRUKTURNOI MAKROKINETIKI AKADEMII NAUK SSSR Moskovskaya oblast Poselok Chernogolovka 142432(SU)**

(72) Erfinder: **MERZHANOV, Alexandr Grigorievich ul. Tretya, 3-2 Moskovskaya obl. pos. Chernogolovka, 142432(SU)**
Erfinder: **BOROVINSKAYA, Inna Petrovna ul. Tretya, 3-2 Moskovskaya obl. pos. Chernogolovka, 142432(SU)**
Erfinder: **PITJULIN, Alexandr Nikolaevich ul. Pervaya, 2a-26 Moskovskaya obl. pos. Chernogolovka, 142432(SU)**
Erfinder: **RATNIKOV, Viktor Ivanovich ul. Tsentralnaya, 6-41 Moskovskaya obl. pos. Chernogolovka, 142432(SU)**
Erfinder: **EPISHIN, Konstantin Leonidovich pr. Stroitelei, 1b-334 Moskovskaya obl. pos. Chernogolovka, 142432(SU)**
Erfinder: **KVANIN, Vadim Leonidovich ul. Oxkaya, 42/1-1-42 Moscow, 109457(SU)**

(74) Vertreter: **Hansen, Bernd, Dr.rer.nat. et al Hoffmann, Eitle & Partner Patentanwälte Arabellastrasse 4 Postfach 81 04 20 D-8000 München 81(DE)**

(54) **VERFAHREN ZUR HERSTELLUNG VON VERBUNDSTOFF.**

(57) Die vorliegende Erfindung wird zur Herstellung von Schneidwerkzeugen, Hartmetallausrüstungen, Gesenken und anderen Erzeugnissen aus dem hergestellten Verbundstoff angewendet.

Das erfindungsgemäße Verfahren schließt die Aufbereitung des Einsatzes, dessen Verdichtung, die Unterbringung des Einsatzes in der Synthesezone, die Entzündung mit nachfolgendem Reagieren der

Einsatzkomponenten im Brennregime ein. Anschließend erfolgt das Halten im Laufe von ca. Q,l s bis etwa 0,5 Std., die Verdichtung der heißen Verbrennungs-produkte unter einem Druck bei einer durchschnittlichen Geschwindigkeit der Druckerhöhung von ca. 10 bis etwa 2000 $kp/cm^2.s$ mit dem nachfolgenden Halten des verdichteten Produktes unter den isobaren Bedingungen bis zur vollständigen Homogenisierung des Verbundstoffes mit dessen nachfolgender Abkühlung und Herstellung des Zielverbundproduktes.

# VERFAHREN ZUR HERSTELLUNG VON VERBUNDSTOFF

## Technisches Gebiet

Die vorliegende Erfindung bezieht sich auf das Gebiet der Pulvermetallurgie, insbesondere auf das Verfahren zur Herstellung von Verbundstoff auf der Grundlage hochschmelzender Metallverbindungen der Gruppen III-VI, VIII des Periodischen Systems der Elemente.

## Zugrundeliegender Stand der Technik

Ein effektiver Einsatz der Verbundstoffe in vielen Industriezweigen ist durch eine Reihe ihrer ziemlich wertvollen Eigenschaften bedingt.

Solch eine Art der Verbundstoffe, wie z.B. Hartlegierungen, besitzt eine hohe Härte (86-94 Einheiten nach der HRA-Skala), die sich mit einer hohen Verschleißfestigkeit, d.h. mit einem hohen Abnutzungswiderstand bei Reibung sowohl an Metallen als auch an nichtmetallischen Werkstoffen vereinigt.

Eine andere Art der Verbundstoffe - Karbidstähle - besitzt eine Härte, die an die Härte der metallkeramischen Werkstoffe herankommt, und eine Festigkeit, die der Stahlfestigkeit kaum nachsteht.

Einige Verbundstoffe sind imstande, in einem bedeutenden Maße ihre Eigenschaften bei höheren Temperaturen aufrechtzuerhalten.

Am effektivsten können die Verbundstoffe zur Herstellung von Schneidwerkzeug, Gesenkausrüstung und anderen Erzeugnissen verwendet werden.

Heutzutage sind die Verfahren zur Herstellung von Verbundstoffen sehr mannigfaltig und verschiedenartig.

Am meisten verbreitet ist das Verfahren zur Herstellung von Hartmetallstoffen (V.I.Tretyakov "Grundlagen der Metallkunde und Technologie zur Herstellung von Sinterhartlegierungen", 1976, "Metallurgie", (Moskau), S.7), das die Herstellung von hochschmelzenden Verbindungen mit der nachfolgenden Anwendung der Verfahren der Pulvermetallurgie einschließt, die in der Aufbereitung des Einsatzes durch Vermischen von Pulvern der gewonnenen hochschmelzenden Verbindungen mit dem Bindemetall, im Pressen der Halbzeuge und deren Sinterung bei einer Temperatur von 1350 bis 1550 $^{o}$C

im Laufe von einigen Stunden in Vakuum oder Wasserstoffelektroöfen besteht.

Die hochschmelzenden Verbindungen für Hartlegierungen
(Karbide, Boride, Nitride der Übergangsmetalle) gewinnt
man durch die Synthese aus den entsprechenden Metallen (oder
deren Oxyden) und Nichtmetallen (Bor, Kohlenstoff, Stickstoff) in Elektroöfen bei Temperaturen von 1600-2200 $^{o}$C im
Laufe von einigen Stunden (ebd., S.265-293).

Ein anderes in ökonomischer und technologischer Hinsicht fortschrittliches Verfahren zur Herstellung von hochschmelzenden Verbindungen (US, A, 3726643) besteht darin,
daß man zumindest ein Metall der Gruppen IV-IV des periodischen Systems zumindest mit einem der Nichtmetalle, wie
Kohlenstoff, Stickstoff, Bor, Silizium, Sauerstoff, Phosphor, Fluor, Chlor, vermischt und den gewonnenen Einsatz
lokal nach einem beliebigen bekannten Verfahren, z.B. durch
Verwendung einer Wolframspirale, entzündet. Dabei wird eine
Temperatur erzeugt, die zum Initiieren der exothermen Reaktion der Wechselwirkung der Metalle mit den Nichtmetallen
auf einem kleinen Abschnitt des Einsatzes erforderlich ist.

Im weiteren bedarf der Prozeß der Wechselwirkung der
Einsatzkomponenten keine äußeren Erwärmungsquellen, da er auf
Kosten der Wärme der exothermen Reaktion selbst verläuft.
Die Reaktion pflanzt sich im Einsatz spontan im Brennregime durch Wärmeübertragung von der erhitzten zu der kalten
Einsatzschicht mit einer Brenngeschwindigkeit von 4-16 cm/s
fort.

Dieses Verfahren zur Herstellung von Hartlegierungen
weist mehrere Stadien auf: es schließt das Stadium der Vorgewinnung der hochschmelzenden Verbindungen und deren nachfolgende Behandlung nach den bekannten Verfahren der Pulvermetallurgie ein.

Außerdem ist das genannte Verfahren mit einem hohen
Energieaufwand verbunden und gestattet es nicht, dichte und
homogene Stoffe auf der Grundlage einiger hochschmelzenden
Verbindungen, z.B. auf der Grundlage von $TiB_2$, wegen ihrer
schlechten Sinterfähigkeit, zu erhalten.

Bekannt ist ein Verfahren zur Herstellung von hoch-

- 3 -

schmelzendem Hartmetallstoff (US, A, 4431448), dessen Porosität unter 1% liegt, mit folgender Zusammensetzung, Masse%:

| | |
|---|---|
| Titandiborid | -40-60; |
| Bindemittel | - 3-30; |
| Titankarbid | - Rest |

das die Aufbereitung des Ausgangseinsatzes durch Vermischen von Titan-, Bor-, Kohlenstoffpulvern und zumindest eines der gegenüber Bor inaktiven Metalle IB der Untergruppe des Periodischen System der Elemente oder der Legierung auf der Grundlage eines der genannten Metalle oder der Metallpulver, die die genannte Legierung unter den Bedingungen der exothermen Reaktion bilden, einschließt. Danach erfolgen die Pressung des Einsatzes, die lokale Entzündung des Einsatzes zum Initiieren der exothermen Reaktion der Wechselwirkung des Titans mit Bor und Kohlenstoff, die dann spontan im Brennregime verläuft und sich im Einsatz durch Wärmeübertragung von der erhitzten Einsatzschicht zu der kalten fortpflanzt. Nach Beendigung der exothermen Reaktion wird die gewonnene festflüssige Reaktionsmasse bis auf eine Porosität von unter 1% zusammengedrückt.

Die beschriebene technische Lösung zeichnet sich durch eine einfache technologische Lösung und Wirtschaftlichkeit aus. Sie ermöglicht es, Stoffe von hoher Härte und Verschleiß beständigkeit mit einer ausreichend hohen Festigkeit zu gewinnen. Durch die Verwendung der genannten Gesamtheit von Verfahren konnte die Porosität der Hartlegierung bis auf 1% und weniger gesenkt werden.

Jedoch weisen die nach dem genannten Verfahren gewonnenen Stoffe eine hohe Inhomogenität der chemischen Zusammensetzung und der physikalisch-mechanischen Eigenschaften auf.

Dies wird dadurch erklärt, daß die Vollständigkeit des Reagierens der Einsatzkomponenten in der Brennzone weniger als Eins ist, infolgedessen enthalten die Verbrennungsprodukte nicht an der Reaktion teilgenommene Komponenten, die im Volumen der Brennprodukte ungleichmäßig verteilt sind.

Dies führt zu der Störung der chemischen Homogenität des Verbundstoffes.

- 4 -

Überdies kommt es zu einer Störung der Wärmeisotropie der Brennprodukte, was ihre ungleichmäßige Verdichtung bedingt und zu einer Senkung der Homogenität der physikalisch-mechanischen Eingenschaften des Verbundstoffes führt.

Bekannt ist ein Verfahren zur Herstellung von hartmetallstoff (EP, 165707, A2), das die Aufbereitung des Einsatzes, der zumindest ein metallisches Element der Untergruppen III, IVa, Va und VIa des Periodischen Systems und zumindest eine Verbindung mindestens eines der Elemente der genannten Gruppen, einzeln oder in Kombination genommen, zumindest ein nichtmetallisches Element, gewählt aus der Reihe Bor, Kohlenstoff, Stickstoff und Silizium, und zumindest eine Verbindung mindestens eines der genannten Elemente, einzeln oder in Kombination genommen, und eine Binderkomponente enthält, die Verdichtung des Einsatzes, die Unterbringung des Einsatzes in der Synthesezone, die Entzündung des Einsatzes mit dem nachfolgenden Reagieren der Einsatzkomponenten im Brennregime ,die Verdichtung der heißen Verbrennungsprodukte mit der Gewinnung des Zielproduktes einschließt.

Das beschriebene Verfahren gestattet es, metallkeramische Stoffe auf der Grundlage verschiedener hochschmelzender Verbindungen zu erhalten, wobei die erzeugten Stoffe sich durch hohe Härtekennwerte und eine sehr unwesentliche Porosität (unter 1%) auszeichnen.

Jedoch ist dabei die Homogenität der synthesierten Stoffe nicht ausreichend genug, was durch unvollständiges Reagieren der Komponenten des Ausgangseinsatzes, durch ungleichmäßige Verdichtung der Brennprodukte und durch eine bedeutende Thermospannung des Zielproduktes bedingt ist.

Die Inhomogenität der Hartlegierungen, die nach dem vorliegenden Verfahren gewonnen werden, kann zu einer Unstabilität und in einigen Fällen auch zu einer jähen Verschlechterung von Betriebseigenschaften der aus den genannten Werkstoffen herzustellenden Einzelteilen führen.

Offenbarung der Erfindung

Der Erfindung liegt die Aufgabe zugrunde, ein Verfahren zur Herstellung von Verbundstoff zu entwickeln, das es erlaubt, auf Kosten einer Veränderung des technologischen Syntheseregimes eine hohe homogenität des gewonnenen Verbundstoffes hinsichtlich der chemischen Zusammensetzung und der Dichtheit zu erreichen.

Die gestellte Aufgabe wird dadurch gelöst, daß ein Verfahren zur Herstellung von Verbundstoff vorgeschlagen wird, das die Aufbereitung des Einsatzes, der zumindest ein metallisches Element der Gruppen III-VI, VIII des Periodischen Systems und zumindest eine Verbindung mindestens eines der Elemente der genannten Gruppen, einzeln oder in Kombinationen genommen, zumindest ein nichtmetallisches Element der Gruppen III-VI des Periodischen Systems und zumindest eine Verbindung mindestens eines der Elemente der genannten Gruppen, einzeln oder in Kombination genommen, und ein Bindemittel enthält, die Verdichtung des Einsatzes, das Einbringen des Einsatzes in die Synthesezone, die Entzündung des Einsatzes mit nachfolgendem Reagieren der Einsatzkomponenten im Brennregime, die Verdichtung der heißen Verbrennungsprodukte mit der Gewinnung des Zielverbundproduktes einschließt, bei dem man gemäß der Erfindung den Einsatz nach der Entzündung bis zur Verdichtung der Verbrennungsprodukte im Laufe von 0,1 Sek. bis etwa 0,5 Std. abstehen läßt und die Verdichtung der heißen Verbrennungsprodukte unter einem Druck bei einer durchschnittlichen Geschwindigkeit der Druckerhöhung von ca. 10 bis etwa 2000 $kp/cm^2 \cdot s$ mit dem nachfolgenden Aushalten des verdichteten Produktes unter den isobaren Bedingungen bis zur vollständigen Homogenisierung des Verbundstoffes und dessen nachfolgende Abkühlung durchführt.

Die Anwendung des erfindungsgemäßen Verfahrens gestattet es, eine hohe Homogenität des Verbundstoffes hinsichtlich der chemischen Zusammensetzung und der Dichte unter Beibehaltung dessen niedriger Porosität zu erreichen.

Die Aufbereitung des Einsatzes, der zumindest ein metallisches Element der Gruppen III-VI, VIII des Periodischen Systems und zumindest eine Verbindung mindestens eines der Elemente der genannten Gruppen, einzeln oder in Kombination genommen, zumindest ein nichtmetallisches Element der Gruppen III-VI des Periodischen Systems und zumindest eine Ver-

- 6 -

bindung mindestens eines der Elemente der genannten Gruppen, einzeln oder in Kombination genommen, und ein Bindemittel enthält, gestattet es, ein Gemisch zu erhalten, das zu einem Hochtemperaturreagieren im Brennprozeß fähig ist. Bei Entzündung des Einsatzes findet das Initiieren der Brennreaktion statt, die durch eine spontane Ausbreitung der Brennzone (der Reaktionsfront) im Einsatz auf Kosten der Wärmeübertragung von der heißen zu der kalten Schicht verläuft.

Beim Brennprozeß bilden sich die Verbindungen der entsprechenden Elemente - der Komponenten des Einsatzes - und es kommt zum Schmelzen und Zerfließen des Bindemittels.

Jedoch findet beim Reagieren der Komponenten des Einsatzes im Brennprozeß eine bedeutende Entwicklung von Gasen statt, die in der Hauptsache oberflächenadsorbierte Gase und leichtsublimierbare Beimengungen darstellen.

Infolgedessen wird in dem porösen Volumen der Verbrennungsprodukte ein bedeutender Druck der Gase erzeugt, der dem Verdichtungsprozeß entgegenwirkt.

Zudem erreicht die Vollständigkeit des Reagierens der Komponenten des Einsatzes in der Brennfront den Wert von 100% nicht, d.h. die Wechselwirkung der Komponenten dauert auch nach Durchgang der Brennwelle durch den Einsatz an.

Um die Vollständigkeit des Reagierens der Ausgangskomponenten des Einsatzes, die Homogenisierung der Verbrennungsprodukte und die Ableitung der sich entwickelnden Gase zu gewährleisten, ist es notwendig, die Verbrennungsprodukte im Laufe einer gewissen Zeit vor der Verdichtung der Brennprodukte auszuhalten.

Die Dauer der Haltezeit hängt von vielen Faktoren, wie das Medium und die Zeit der Aufbereitung des Einsatzes, die relative Dichte des Einsatzes nach der Verdichtung, die charakteristische Größe des Einsatzvolumens, und andere Faktoren ab.

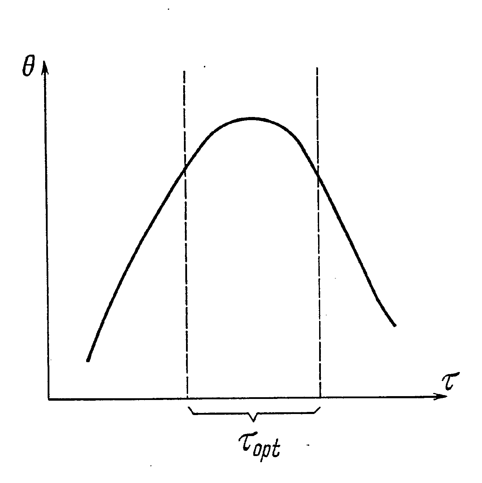

Während der Haltezeit wird seinerseits eine intensive Temperatursenkung der Verbrennungsprodukte beobachtet, d.h. es findet eine Verschlechterung deren Verdichtung statt. Die qualitative Abhängigkeit der relativen Dichte des Verbundstoffes ( $\theta$ ) von der Dauer der Haltezeit ( $\tau$ ) ist auf

der beiliegenden Zeichnung dargestellt.

Aus der auf der beiliegenden Zeichnung abgebildeten Darstellung ist ersichtlich, daß es ein Gebiet der optimalen Werte der Haltezeit vor der Verdichtung der Verbrennungsprodukte ( $\tau_{optimal}$ ) gibt, in dem die relative Dichte des Verbundstoffes maximal ist.

Bei $\tau$ weniger als $\tau_{optimal}$ erfolgt die Verstopfung der vergasten Beimengungen, die bei der Abkühlung sich im Stoff auflösen und dessen Homogenität stören.

Außerdem führt eine vorzeitige Verdichtung der Verbrennungsprodukte zu einer unvollständigen Nachreagierung der Einsatz-Komponenten, was ebenfalls die Homogenität des Verbundstoffes stört. Durch diese Ursachen wird die untere Grenze der Haltezeit bestimmt.

Bei $\tau$ größer als $\tau_{optimal}$ erfolgt eine jähe Temperaturerniedrigung der Verbrennungsprodukte, was zu einer unvollständigen Verdichtung des Verbundstoffs, d.h. zur Erhöhung dessen Porosität führt.

Die obere Grenzen der Haltezeit wird also durch die Möglichkeit einer vollständigen Verdichtung des Stoffes bestimmt.

Nach Ablauf der Haltezeit beginnt man mit der Verdichtung der heißen Verbrennungsprodukte unter Druck.

In diesem Falle spielt die durchschnittliche Geschwindigkeit der Druckerhöhung eine große Rolle. Beim Brennen kleiner Einsatzvolumen mit geringer Wärmereserve ist eine schnelle Verdichtung der Verbrennungsprodukte erforderlich, bevor ihre Temperatur bis auf kritische Temperatur heruntergeht (als kritisch wird die Temperatur der Verbrennungsprodukte bezeichnet, bei der ihre Verdichtung nicht mehr möglich ist). In diesem Falle ist die durchschnittliche Geschwindigkeit der Druckerhöhung hoch.

Aber beim Verdichten großer Einsatzvolumen kann eine schnelle Druckerhöhung infolge überwiegender Verdichtung der Grenzschichten zu ungleicher Dichte des synthesierbaren Verbundstoffes führen.

Auf diese Weise wird das beanspruchte Intervall der durchschnittlichen Geschwindigkeit der Druckerhöhung durch folgende Faktoren bestimmt:

- die untere Grenze - durch die Möglichkeit einer gleich-

- 8 -

mäßigen Verdichtung der Verbrennungsprodukte großen Volumens bis zu einem praktisch porenlosen Zustand, d.h. bei Verminderung der Geschwindigkeit der Druckerhöhung steigt die Porosität des Endverbundstoffes an;

die obere Grenze - durch die Möglichkeit einer vollständigen Verdichtung der Verbrennungsprodukte kleinen Volumens bei Aufrechterhaltung einer hohen Homogenität des Verbundstoffes, d.h., bei einem weiteren Ansteigen der durchschnittlichen Geschwindigkeit der Druckerhöhung wird die Homogenität des Verbundstoffes gestört.

Die Eigenschaften des Verbundstoffes werden durch die Haltezeit des verdichteten Produktes unter den isobaren Bedingungen stark beeinflußt. Während dieser Haltezeit findet außer einer weiteren Verdichtung des Stoffes seine Homogenisierung statt, d.h. das Ausgleichen der Konzentrationsprofile im Stoffvolumen, eine gleichmäßig Mikroporenverwachsung, der Austritt der Strukturdefekte auf die Stoffoberfläche.

Somit gestattet die Haltezeit unter den isobaren Bedingungen die Homogenität des Verbundstoffes bedeutend zu steigern.

Die Bildung des Verbundstoffes verläuft unter den Extremalbedingungen. Zudem haben die hochschmelzende Komponente und die Binderkomponente oft unterschiedliche thermische Ausdehnungskoeffiziente. Infolgedessen weist der Stoff nach dem Aushalten unter den isobaren Bedingungen riesige thermische Spannungen auf.

Es ist folglich wünschenswert, vor der Abkühlung des Verbundstoffes dessen thermische Behandlung vorzunehmen. So gestattet z.B. das Glühen, die Gefüge- und thermische Spannungen im Stoff zu beseitigen, d.h. dessen Gefügehomogenität zu erhöhen.

Eine andere Art der thermischen Behandlung ist die Normalisierung, sie gestattet es, die Homogenität der Binderkomponente zu erhöhen, d.h. sie führt auch zur Gewinnung eines gleichmäßigeren Stoffes.

Als weiterer Vorteil der thermischen Behandlung kann eine Verbesserung der Bearbeitbarkeit des Verbundstoffes, z.B. durch Anlassen, sein.

Es ist zweckmäßig, die thermische Behandlung des gewonnenen Verbundstoffes nach der Abkühlung durchzuführen.

Erstens, die Alterungsprozesse verlaufen in einigen Stoffen intensiv. So kann z.B. in den Stoffen mit dem Binder auf der Titanbasis mit der Zeit die Homogenität der Binderkomponente infolge des Übergangs der Hochtemperatur-ß- -Modifikation in eine Niedrigtemperatur- $\alpha$ -Modifikation gestört werden. Solch eine Art der zusätzlichen thermischen Behandlung, wie die Härtung, gestattet es, in diesem Falle die Homogenität des Verbundstoffes zu erhöhen.

Es ist wünschenswert, den gewonnenen Verbundstoff mit einer durchschnittlichen Geschwindigkeit von ca. 10 bis etwa 5000 Grad/Std. abzukühlen.

Einen bedeutenden Einfluß auf die Eigenschaften des Verbundstoffes übt die Geschwindigkeit dessen Abkühlung aus.

Bei einer sehr hohen Abkühlungsgeschwindigkeit können im Stoff zahlreiche Defekte entstehen, was zu einer Störung der Homogenität des Stoffes führt. Dadurch wird die obere Grenze der Abkühlungsgeschwindigkeit bestimmt.

Bei sehr niedrigen Abkühlungsgeschwindigkeiten können im Stoff unerwünschte Prozesse ablaufen, solche wie Rekristallisation, Veränderung der Phasenzusammensetzung einzelner Bestandteile des Verbundstoffes u.ä. Die untere Grenze der Abkühlungsgeschwindigkeit ist also unter Berücksichtigung der Bedingungen zur Aufrechterhaltung einer hohen Homogenität des Verbundstoffes gewählt. Die obere Grenze der Abkühlungsgeschwindigkeit wird durch die Bedingungen der Erhaltung des Stoffes bestimmt, d.h. bei deren Erhöhung ist die Zerstörung des Stoffes möglich.

Es sei bemerkt, daß die Abkühlungsgeschwindigkeit unter Berücksichtigung der Zusammensetzung des Verbundstoffes gewählt werden soll.

Wie bereits oben erwähnt, findet beim Brennen des Einsatzes eine beträchtliche Gasentwicklung statt, dabei kann die Gassättigung 160 $cm^3$/g und mehr erreichen.

Folglich kann beim Brennen des Einsatzes eine Zerstörung des Einsatzes durch Gasströmungen erfolgen, was zur Störung

- 10 -

der Homogenität des Verbundstoffes führt.

Um dies zu verhindern, ist es zweckmäßig, zumindest die Entzündung des Einsatzes und das Anfangsstadium des Aushaltens vor der Verdichtung der Verbrennungsprodukte unter einem Druck von ca. 10 bis etwa 1000 $kp/cm^2$ (als Anfangsstadium der Haltezeit wird das Zeitintervall bezeichnet, während dessen die Verbrennung des Einsatzes hauptsächlich abgeschlossen wird) durchzuführen.

Die untere Druckgrenze wird durch die Bedingungen der Aufrechterhaltung der Ganzheit des Verbundstoffes bestimmt.

Die obere Grenze wird unter Berücksichtigung folgender Faktoren gewählt. Bei Druckerhöhung wird der Entgasungsprozeß der Verbrennungsprodukte verlangsamt, d.h. es entsteht die Notwendigkeit für eine längere Haltezeit, was zum Ansteigen der Porosität des Verbundstoffes führt. Zudem führt die Druckerhöhung zu der Intensifizierung der Wärmeableitung von den heißen Verbrennungsprodukten, d.h. zur Verminderung deren Temperatur und Verschlechterung der Verdichtungsbedingungen des Verbundstoffes.

In einigen Fällen erfolgt eine starke Gasentwicklung nicht nur beim Brennen des Einsatzes, sondern auch im Prozeß der Nachreagierung der Komponenten, z.B. beim Vorhandensein im Einsatz von Verbindungen, die unter Bildung von gasförmigen Produkten reagieren. Als Beispiel können die Reaktionen angeführt werden:

$$Ta_2O_5 + 7C \longrightarrow 2TaC + 5CO \quad oder$$
$$Ta_2O_5 \cdot 5CuO + 12C \longrightarrow 2TaC + 10CO + 5Cu.$$

Es empfiehlt sich, in diesem Falle die gesamte Haltezeit vor der Verdichtung der Verbrennungsprodukte unter einem Druck von ca. 10 bis etwa 1000 $kP/cm^2$ vorzunehmen. Die Wahl der Grenzdruckwerte wurde unter Berücksichtigung des Einflußes der oben beschriebenen Faktoren getroffen.

Die Brenngeschwindigkeit des in diesem Verfahren angewendeten Einsatzes kann von einigen Millimeterteilen bis zu einigen Zentimeterzehnen pro Sekunde betragen. Dabei verändert sich die Brenntemperatur von 1000 $^{\circ}C$ bis 4000 $^{\circ}C$.

Beim Brennen des Einsatzes mit einer kleinen spezifischen Wärmeentwicklung, d.h. mit geringen Geschwindigkeits-- und Brenntemperaturwerten, kann eine bedeutende räumliche Unisothermie der Verbrennungsprodukte beobachtet werden, was zu einer Störung der Homogenität des Verbundstoffes führt.

Zudem besitzen einige Einsatzzusammensetzungen eine derart kleine Wärmeentwicklung, daß die Ausbreitung der Brennfront in ihnen ohne Zuleitung einer Zusatzwärme nicht möglich ist.

Es ist zweckmäßig, in diesem Falle vor der Entzündung des Einsatzes dessen Erhitzung durch eine äußere Energiequelle (Induktionserhitzung, Erhitzung durch direkten Stromdurchfluß, Erhitzung mit Hilfe eines "chemischen Ofens", Erhitzung in einem Ofen, Erhitzung im Ultraschallfeld u.a.) bis auf eine Temperatur von ca. 100 bis etwa 1200 $^{\circ}$C durchzuführen.

Manchmal wird dieses Verfahren für die Erhöhung der Temperatur der Verbrennungsprodukte benutzt, d.h. für die Intensivierung der Prozesse der Verdichtung und Homogenisierung, was zur Erhöhung der Homogenität führt.

Es sei bemerkt, daß die Erhitzung des Einsatzes vor der Entzündung nur beim Abstehenlassen vor der Verdichtung der Verbrennungsprodukte, beim Halten des verdichteten Produktes unter den isobaren Bedingungen und bei optimaler Geschwindigkeit der Druckerhöhung effektvoll ist. Dies ist damit verbunden, daß das Reagieren des Einsatzes mit kleiner spezifischer Wärmeentwicklung mit einem verhältnismäßig kleinen Umwandlungsgrad der Elemente in der Brennwelle verläuft, d.h. es existiert eine bedeutende Nachbrennzone. Ein Nachreagieren der Einsatzkomponenten in der Nachbrennzone ist, wie bereits oben gezeigt, nur bei Durchführung des Haltens vor der Verdichtung der Verbrennungsprodukte möglich. Eine langsame Nachreagierung der Einsatzkomponenten führt zu einer Störung der Stoffhomogenität, was durch eine Durchführung der Verdichtung der Verbrennungsprodukte bei einer optimalen Geschwindigkeit der Druckerhöhung und durch Aushalten des verdichteten Produktes unter den isobaren Bedingungen ausgeglichen wird.

Die untere Temperaturgrenze der Einsatzerhitzung vor der Entzündung wird durch die Bedingungen der Gewinnung eines homogenen Verbundstoffes bestimmt, d.h. bei der Temperaturerniedrigung in den Verbrennungsprodukten kann eine beträchtliche Menge unreagierter Komponenten vorhanden sein, was zu einer Störung der Homogenität des Stoffes und zur Erhöhung dessen Porosität führt.

Die obere Grenze ist durch die Bedingungen der Selbstentzündung des Einsatzes bedingt, d.h. bei hohen Temperaturen findet ein spontaner Reaktionsbeginn statt.

Bei der Gewinnung von Verbundstoffen, deren einzelne Ingredienzien eine hohe Schmelztemperatur besitzen, ist es ratsam, nach Verdichtung des Einsatzes den Einsatz in einer porösen wärmeisolierenden Hülle unterzubringen.

Anderenfalls kommt es zu einer Abkühlung und als Folge davon zu einer unvollständigen Verbrennung sowie einer unvollständigen Verdichtung der Oberflächenschichten des Stoffes, was dessen Homogenität stört und die Dichte vermindert.

Die Verdichtung der Verbundstoffe mit einer hohen Schmelztemperatur ist bei einer optimalen Geschwindigkeit der Druckerhöhung durchzuführen, sonst wird der Verbundstoff eine hohe Dichteungleichheit besitzen, d.h. er wird unhomogen sein.

Im Falle, wenn der Verbundstoff eine hohe Schmelztemperatur besitzt und der Ausgangseinsatz eine bedeutende Gassättigung hat, ist es zweckmäßig, daß die wärmeisolierende Hülle eine offene Porosität aufweist, deren Volumen etwa 60 % und weniger von dem Volumen der wärmeisolierenden Hülle beträgt.

In diesem Falle wird die Entgasung der Verbrennungsprodukte erleichtert, was zu einer Erhöhung der Einphasigkeit des Verbundstoffes führt.

Es sei bemerkt, daß die Synthese derartiger Stoffe ein obligatorisches Aushalten vor der Verdichtung der Verbrennungsprodukte und ein Aushalten der verdichteten Produkte unter den isobaren Bedingungen erforderlich macht.

Der obere Wert der offenen Porosität wird aus den Festigkeitsbedingungen der wärmeisolierenden Hülle bestimmt, d.h. bei einer weiteren Erhöhung der Porosität wird die wärmeisolierenden Hülle zerstört, was es nicht gestattet,

- 13 -

einen dichten homogenen Stoff zu erhalten.

Das Abstehenlassen vor der Verdichtung der Brennprodukte, das Halten der verdichteten Produktes unter den isobaren Bedingungen und die Verdichtung der Verbrennungsprodukte bei optimaler Geschwindigkeit der Druckerhöhung erlauben es:

1) als metallisches Element die Metallabfälle der Gruppen III-VI,VIII des Periodischen Systems und/oder dessen Legierung zu verwenden;

2) als nichtmetallisches Element das nichtmetallische Element der Gruppen III-VI des Periodischen Systems, das zu den Abfällen des Produktionsprozesses gelangte, zu verwenden;

3) als Binderkomponente eine Binderkomponente, die zu den Abfällen des Produktionsprozesses gelangte, zu verwenden.

Als metallisches Element können Abfälle der verschiedenen Arten der Bearbeitung von Metallen und Legierungen: spannende Formung, Schleifen u.a., verwendet werden.

Es können auch verschiedene nicht standardgerechte Reste verwendet werden, die im Prozeß der Gewinnung von Metallen und Legierungen oder von Erzeugnissen aus diesen anfallen.

Als nichtmetallisches Element können sowohl die Abfälle der Bearbeitung, z.B. Graphitsplitt, als auch verschiedene nicht standardgerechte Abfälle, z.B. Kohlenstoff- bzw. Borfaserabfälle, Siliziumspiegelabfälle, verbrauchte Graphitelektroden usw., verwendet werden.

Als Bindemittel kann eine beliebige Komponente verwendet werden, die zu den Abfällen des Produktionsprozesses gelangte und besonderen Forderungen stattgibt, z.B. Abfälle der Bearbeitung von Stahl, Gußeisen, Metall, Nichtmetall u.a.

Die Abfälle verschiedener Produktionsprozesse sind in der Regel durch fremde Beimengungen stark verschmutzt. Diese Beimengungen werden bei einem Hochtemperaturreagieren der Einsatzkomponenten meist sublimiert und erhöhen dadurch die Gasentwicklung bei der Synthese.

Auf diese Weise erlaubt nur das Abstehenlassen vor der Verdichtung der Verbrennungsprodukte eine vollständige Entgasung der Verbrennungsprodukte, was, wie bereits oben erwähnt, zur Gewinnung eines dichten Verbundstoffs mit hoher Homogenität führt.

- 14 -

Zudem hat der Einsatz, zu dem die Abfälle des Produktionsprozesses gehören, eine verminderte Geschwindigkeit und Temperatur der Verbrennung, d.h. bei der Verdichtung der Verbrennungsprodukte verlaufen die Verdichtungs- und Homogenisierungsprozesse langsamer als bei Verwendung von Reinelementen.

Auf diese Weise erlangen eine besondere Bedeutung die Durchführung der Haltezeit der verdichteten Stoffe unter den isobaren Bedingungen und die Verdichtung des Stoffes bei optimaler Geschwindigkeit der Druckerhöhung. Nur diese Verfahrensweisen gestattet es, homogene Stoffe bei Verwendung von Abfällen des Produktionsprozesses als Einsatzkomponenten zu gewinnen.

Wie bereits erwähnt, findet beim Brennen des Einsatzes in den meisten Fällen eine bedeutende Gasentwicklung statt. Diese Erscheinung erschwert die Lösung der Aufgabe der Gewinnung eines homogenen Verbundstoffes.

Die Durchführung der Haltezeit vor der Verdichtung der Brennprodukte erlaubt es, die Homogenität des Stoffes zu erhöhen, jedoch (s. Begleitzeichnung) findet während der Haltezeit vor der Verdichtung der Brennprodukte die Temperaturerniedrigung der Brennprodukte statt. Wenn also die Brenntemperatur des Einsatzes verhältnismäßig klein ist, (und nur sie bestimmt die Temperatur der Verbrennungsprodukte), so ist die Entgasung der Verbrennungsprodukte zu intensivieren.

In diesem Falle wird es empfohlen, vor der Entzündung des Einsatzes die Synthesezone bis zu einem Restdruck von ca. $10^{-1}$ mm QS und weniger zu vakuumieren, was die Homogenität des Verbundstoffes zu erhöhen gestattet.

Die untere Grenze des Vakuumierungsgrades wird durch die Effektivität dieser Verfahrensweise bestimmt, d.h. bei einem Restdruck über $10^{-1}$ mm QS kann keine Intesivierung des Prozesses der Gasreinigung der Verbrennungsprodukte erfolgen.

Von besonderem Interesse ist eine direkte Herstellung der Erzeugnisse aus dem Verbundstoff oder die Synthese eines Rohlings aus dem Verbundstoff, der einer minimalen mechanischen Bearbeitung bedarf.

In diesem Falle ist es wünschenswert, den Einsatz wäh-

– 15 –

rend des Verdichtungsprozesses zu formen.

Die Durchführung des Prozesses der Gewinnung des Verbundstoffes unter Verwendung solcher Verfahrensweisen wie das Halten vor der Verdichtung der Brennprodukte, das Halten der verdichteten Produkte unter den isobaren Bedingungen, die Verdichtung der Verbrennungsprodukte unter Druck bei durchschnittlicher Geschwindigkeit der Druckerhöhung von ca. 10 bis etwa 2000 kp/cm$^2$.s gestatten es, die ursprüngliche Ausgangsform zu erhalten, d.h. einen Rohling herzustellen, der der Form nach dem Enderzeugnis nahekommt.

Bekanntlich haben die Abhängigkeit von Brenngeschwindigkeit und -temperatur des Einsatzes von dessen relativer Dichte einen extremalen Charakter, wobei der Wert der optimalen relativen Dichte von der Zusammensetzung des Einsatzes abhängig ist.

Zu gleicher Zeit bestimmen der Geschwindigkeitswert und der Temperaturwert des Einsatzbrennens die optimalen Werte des Haltens vor der Verdichtung der Verbrennungsprodukte, der Geschwindigkeit der Druckerhöhung und des Haltens der verdichteten Produkte unter den isobaren Bedingungen.

Es ist somit wünschenswert, die Verdichtung des Einsatzes bis auf die relative Dichte von ca. 20 bis etwa 90 % durchzuführen.

Bei einer 20%igen Dichte ist im Einsatz eine riesige Menge von Defekten vorhanden: Bögen, Brücken usw.

Dies führt zu einer Verzerrung der Brennwelle, zur Störung der Wärmeisotropie der Verbrennungsprodukte, d.h. zu der Verminderung der Stoffhomogenität.

Bei einer Einsatzdichte von über 90% vermindern sich stark die Einsatz-Brennparameter, was die Prozesse der Verdichtung und der Homogenisierung der Verbrennungsprodukte verlangsamt sowie zu einer Verminderung der Homogenität des Verbundstoffs führt.

Für die Intensivierung der Nachbrennprozesse, der Verdichtung und Homogenisierung der Verbrennungsprodukte ist es wünschenswert, das Halten vor der Verdichtung der heißen Verbrennungsprodukte, deren Verdichtung und Aushalten der verdichteten Produkte unter den isobaren Bedingungen in einem Ultraschallfeld durchzuführen.

Die Überlagerung der Ultraschallschwingungen erhöht die Temperatur der Verbrennungsprodukte, beschleunigt die Prozesse des kapillaren Zerfließens des Bindemittels, intensiviert die Homogenisierung des Verbundstoffes, d.h. führt zur Erhöhung dessen Homogenität.

Gewöhnlich wird der Einsatz mit Hilfe einer elektrischen Spirale, einer Graphitelektrode, der Induktionserhitzung, eines Laserstrahls usw. entzündet.

Alle diese Entzündungsverfahren führen zur Entstehung von Defekten an der Entzündungsstelle, was die Homogenität des Verbundstoffes vermindert. Das Aushalten vor der Verdichtung der Verbrennungsprodukte, das Aushalten der verdichteten Produkte unter den isobaren Bedingungen, die Verdichtung der Verbrennungsprodukte bei optimaler Geschwindigkeit der Druckerhöhung gestattet in den meisten Fällen, diesen Effekt zu nivellieren.

In den Fällen, wo dies nicht gelingt, ist es zweckmäßig, den Einsatz mit Hilfe des Ultraschalls zu entzünden. Dabei entstehen im Stoff praktisch keine Defekte, d.h. der Stoff besitzt eine hohe Homogenität.

Bei Erhöhung des Volumens und der Masse des Einsatzes wird die Frage seiner Verbrennungszeit besonders wichtig. Bei der Entzündung des Einsatzes in irgendeinem Punkt kann der Wert der Haltezeit vor der Verdichtung der Verbrennungsprodukte so groß werden, daß zum Zeitpunkt der Anlegung des Verdichtungsdrucks die Verbrennungsprodukte hinsichtlich der Wärme inhomogen werden können.

Zur Erhöhung der Homogenität des Verbundstoffes ist es zweckmäßig, auf der Oberfläche des Einsatzes in der Synthesezone eine perforierte Schicht aus einem wärmebeständigen Stoff unterzubringen, auf der ein Zündmittel angeordnet wird, dessen Brenngeschwindigkeit der Brenngeschwindigkeit des Einsatzes gleich ist oder diese übertrifft, dabei wird der Einsatz mit Hilfe des Zündmittels entzündet.

In diesem Falle vermindert sich nach Initiierung der Reaktion im Zündmittel die Zeit der Verbrennung des Einsatzes infolge der Gewährleistung des Mehrpunktinitiierens durch die

- 17 -

Perforation des wärmebeständigen Stoffes jählings. Das Zündmittel wird vom Grundstoff nach Aufhebung des Dichtungsdrucks leicht getrennt.

Im Falle eines großen Volumens und der Masse des Einsatzes spielt die Gewährleistung einer vollständigen und schnellen Ableitung der sich beim Brennen entwickelnden adsorbierten Gase und leichtsublimierbarer Beimengungen eine wichtige Rolle.

Zur Verbesserung der Gasausscheidungsbedingungen empfiehlt es sich, im Einsatz Gasableitungskanäle auszubilden, deren Volumen etwa 60% und weniger von dem Volumen des Einsatzes ausmacht. Eine Erhöhung des Kanalvolumens über 60 % ist nicht zweckmäßig, da die Brenngeschwindigkeit des Einsatzes abnimmt, was zu einer Verschlechterung der Homogenität des zu gewinnenden Verbundstoffes führt.

Beste Ausführungsform der Erfindung

Das Verfahren zur Herstellung des Verbundstoffes wird vorzugsweise wie folgt durchgeführt.

Nach einem der Verfahren, z.B. durch Vermischen, wird der Einsatz aufbereitet, der zumindest ein metallisches Element der Gruppen III-VI, VIII des Periodischen Systems und zumindest eine Verbindung mindestens eines der Elemente der genannten Gruppen, einzeln oder in Kombination genommen, zumindest ein nichtmetallisches Element der Gruppen III-VI des Periodischen Systems und zumindest eine Verbindung mindestens eines der Elemente der genannten Gruppen, einzeln oder in Kombination genommen, und ein Bindemittel, z.B. Titan, Kohlenstoff und Nickel, enthält.

Man nimmt die Komponenten des Einsatzes in einem Verhältnis, daß deren weitere Wechselwirkung im Brennregime zur Gewinnung des Verbundstoffes mit der vorgegebenen Zusammensetzung führt.

Zur Verringerung der Selbstkosten des Verbundstoffes bei Aufrecherhaltung dessen hoher Homogenität und Dichte werden in einigen Fällen als metallisches Element Abfälle des Metalls der Gruppen III-VI des Periodischen Systems und/oder seiner Legierung, z.B. die Abfälle beim Schleifen der Titanlegierungen verwendet. Als nichtmetallisches Element verwen-

- 18 -

det man das nichtmetallische Element der Gruppen III-VI des Periodischen Systems, das zu den Abfällen des Produktionsprozesses gelangt, z.B., Borfasernschnitzel, und als Bindemittel wird eine Komponente, die zu den Abfällen des Produktionsprozesses gelangt, z.B. Abfälle beim Stahlschleifen.

Der aufbereitete Einsatz wird z.B. bis auf eine Dichte von 0,6 verdichtet und z.B. in Form von Zylindern mit einem Durchmesser von 160 mm und einer Höhe von 60 mm geformt.

Dann wird der Einsatz in einer porösen wärmeisolierenden Hülle, die eine offene Porosität hat, mit einem Volumen von etwa 60% und weniger von dem Volumen der wärmeisolierenden Hülle untergebracht.

Der Einsatz ist in der porösen wärmeisolierenden Hülle dann unterzubringen, wenn der Verbundstoff eine hohe Schmelztemperatur haben soll und der Ausgangseinsatz eine bedeutende Gassättigung aufweist. In diesem Falle wird die Entgasung der Verbrennungsprodukte erleichtert, was zur Erhöhung der Homogenität des Verbundstoffes führt.

Man bringt den Einsatz in der wärmeisolierenden Hülle in die Synthesezone unter z.B. in einer Preßform, eine Druckkammer mit Gas als Druckmedium oder eine hydraulische Druckkammer, die mit einer z.B. in Form einer Wolframspirale ausgebildeten Zündeinrichtung ausgestattet sind.

Im Falle einer Verwendung des Einsatzes mit einer kleinen charakteristischen Größe kann die Zündeinrichtung in Form eines Ultraschallwandlers ausgebildet sein.

Dann wird der Einsatz entzündet. Zu diesem Zweck wird durch die sich mit der Einsatzoberfläche an einem oder mehreren Abschnitten berührende Wolframspirale ein elektrischer Strom im Laufe von etwa 0,5 s durchgelassen.

Vor der Entzündung des Einsatzes wird an diesen ein Druck von ca. 10 bis etwa 1000 kp/cm$^2$ angelegt, dadurch kann die Störung der Ganzheit des Einsatzes im Brennprozeß vermieden werden.

In einigen Fällen wird vor der Entzündung des Einsatzes wird mit einer äußeren Energiequelle, z.B. Induktor, Plasmabrenner, Ultraschall, bis auf eine Temperatur von ca. 100 bis etwa 1200 $^{\circ}$C erhitzt.

Falls die Brenntemperatur des Einsatzes relativ klein ist, wird vor der Entzündung ein Vakuumieren der Synthesezone z.B. bis zu einem Restdruck von $10^{-1}$ mm QS und weniger durchgeführt.

Um die Homogenität des Verbundstoffes zu erhöhen, wird in einigen Fällen auf der Oberfläche des Einsatzes in der Synthesezone eine perforierte Schicht aus wärmebeständigem Stoff, z.B. Asbest, untergebracht, auf dem man ein Zündmittel anordnet, dessen Brenngeschwindigkeit der Brenngeschwindigkeit des Einsatzes gleich ist oder diese übertrifft, z.B. ein stöchiometrisches Gemisch von Titan- und Borpulvern, dessen Brenngeschwindigkeit z.B. das 1,5fache der Brenngeschwindigkeit des Einsatzes ausmacht, wobei der Einsatz mittels eines Zündmittels entzündet wird.

Für die Verbesserung der Bedingungen der Gasentwicklung im Einsatz vor dessen Entzündung können Gasableitungskanäle, deren Volumen etwa 60 % und weniger von dem Einsatzvolumen beträgt, ausgeführt werden.

Im Ergebnis der Entzündung auf dem zu entzündenden Abschnitt bzw. den Abschnitten des Einsatzes wird eine Temperatur erzeugt, die zum Initiieren einer exothermen Hochtemperaturreaktion der Wechselwirkung der Einsatzkomponenten erforderlich ist. Im weiteren sind für den Brennprozeß keine äußeren Erhitzungsquellen erforderlich denn der Brennprozeß verlauft auf Kosten der Wärme der exothremen Reaktion selbst.

Nach der Entzündung wird der Einsatz vor der Verdichtung der Brennprodukte im Laufe von ca. 0,1 s bis etwa 0,5 Std. ausgehalten.

Im Verlaufe der genannten Haltezeit erfolgt unmittelbar der Prozeß der Wechselwirkung der Einsatzkomponenten selbst, der in Form einer spontanen Ausbreitung im Einsatz der Reaktionszone (Brennzone) auf Kosten der Wärmeübertragung von den erhitzten Einsatzschichten zu den kalten verläuft. Die Brenngeschwindigkeit beträgt z.B. 2 cm/s, die Temperatur in der Brennzone beträgt z.B. 2700 $^{o}$C.

In der Brennzone erfolgt die Bildung der entsprechenden Verbindungen, z.B. des Titankarbids, das Schmelzen und Zerfließen des Bindemittels.

- 20 -

Es sei bemerkt, daß ein Teil der Haltezeit vor der Verdichtung der Verbrennungsprodukte, in dessen Verlauf die Ausbreitung der Brennzone im Einsatz erfolgt, als Anfangsstadium der Haltezeit vor der Verdichtung der Verbrennungsprodukte bezeichnet wird. Im Laufe der gesamten genannten Haltezeit erfolgt ein Nachreagieren der Einsatzkomponenten (in der Brennzone ist die Vollständigkeit des Reagierens weniger als 1), die Entgasung der Brennprodukte und deren Homogenisierung.

In einigen Fällen werden die Entzündung und das Anfangsstadium der Haltezeit vor der Verdichtung der Verbrennungsprodukte unter einem Druck von ca. 10 bis etwa 1000 kp/cm$^2$ durchgeführt, und nach Beendigung des Anfangsstadiums der genannten Haltezeit wird der Druck entlastet, und der übrige Teil dieser Haltezeit wird ohne Druck durchgeführt.

In einigen Fällen führt man die Entzündung und die gesammte genannte Haltezeit unter einem Druck von ca. 10 bis etwa 1000 kp/cm$^2$ durch.

Nach Beendigung der Haltezeit führt man die Verdichtung der heißen Verbrennungsprodukte unter einem Druck z.B. von 1500 kp/cm$^2$ bei einer durchschnittlichen Geschwindigkeit der Druckerhöhung von ca. 10 bis etwa 2000 kp/cm$^2$.s durch.

Anschließend wird das verdichtete Produkt unter den isobaren Bedingungen, z.B. unter einem Druck von 1400 kp/cm$^2$, im Laufe z.B. von 60 s gehalten.

Falls der Einsatz eine kleine charakteristische Volumengröße hat, wird die Aushaltung vor der Verdichtung der heißen Verbrennungsprodukte, deren Verdichtung und Aushalten der verdichteten Produkte unter den isobaren Bedingungen im Feld der Ultraschallschwingungen durchgeführt.

Nach Beendigung des Aushaltens des verdichteten Produktes unter den isobaren Bedingungen wird der gewonnene Verbundstoff abgekühlt, z.B. an der Luft, oder mit der vorgegebenen Geschwindigkeit, z.B. von 200 Grad/Std.

In einigen Fällen wird der Verbundstoff vor der Abkühlung, z.B. im Regime der Relaxationsröstung, wärmebehandelt.

Nach der Abkühlung des Verbundstoffes kann dieser normalisiert werden.

Zum besseren Verständnis der vorliegenden Erfindung werden nachstehend konkrete Ausführungsbeispiele derselben angeführt. Die Homogenität der gemäß den Beispielen hergestellten Verbundstoffe und der nach den bekannten Technologie (Prototyp) hergestellten Stoffe, bestimmt nach den oben beschriebenen Methodiken, sind in der Tabelle nach den Beispielen angeführt.

Beispiel 1.

Man vermischte den Einsatz, der in Masse% enthielt: 63,10 - Titan, 28,4 - Bor und 8,5 - Nickel-Kupferlegierung.

Man verdichtete den Einsatz unter einem Druck von 200 $kp/cm^2$, brachte ihn in die Synthesezone ein, entzündete den Einsatz mit nachfolgendem Reagieren der Einsatzkomponenten im Brennregime, führte die Haltezeit im Laufe von 0,1 s durch und verdichtete die heißen Verbrennungsprodukte unter einem Druck von 800 $kp/cm^2$ bei einer durchschnittlichen Geschwindigkeit der Druckerhöhung von 2000 $kp/cm^2 \cdot s$, anschließend führte man das isobare Halten des verdichteten Produktes unter einem Druck von 800 $kp/cm^2$ im Laufe von 2 s durch.

Die Kennwerte des hergestellten Verbundstoffes sind in der Tabelle angeführt.

Beispiel 2.

Man vermischte den Einsatz, der in Masse% enthielt: 9,81 - Zirkon, 62,18 - Tantal, 9,03 - Kohlenstoff, 18,98 - - Tantalpentoxyd.

Man verdichtete den Einsatz unter einem Druck von 300 $kp/cm^2$, brachte ihn in die Synthesezone ein, entzündete den Einsatz mit nachfolgendem Reagieren der Einsatzkomponenten im Brennregime, führt die Haltezeit im Laufe von 0,5 Std. durch und verdichtete die heißen Verbrennungsprodukte unter einem Druck von 1000 $kp/cm^2$ bei einer durchschnittlichen Geschwindigkeit der Druckerhöhung von 10 $kp/cm^2 \cdot s$, anschließend führte man das isobare Halten des verdichteten Produktes unter einem Druck von 1500 $kp/cm^2$ im Laufe von 5 min durch.

Die Kennwerte des hergestellten Verbundstoffes sind in der Tabelle angeführt.

Beispiel 3.

Man vermischte den Einsatz, der in Masse% enthielt: 71,39 - Titan, 7,83 - Bor, 10,28 - Kohlenstoff, 5,00 Borkarbid und 5,5 - Eisen.

Man verdichtete den Einsatz unter einem Druck von 250 kp/cm$^2$, brachte ihn in die Synthesezone ein, entzündete den Einsatz mit nachfolgendem Reagieren der Einsatzkomponenten im Brennregime, führte die Haltezeit im Laufe von 0,1 Std. durch und verdichtete die heißen Verbrennungsprodukte unter einem Druck bei einer durchschnittlichen Geschwindigkeit der Druckerhöhung von 1000 kp/cm$^2$.s, anschließend führte man das isobare Halten des verdichteten Produktes unter einem Druck von 1000 kp/cm$^2$ im Laufe von 10 min durch.

Die Kennwerte des hergestellten Verbundstoffes sind in der Tabelle angeführt.

Beispiel 4.

Man vermischte den Einsatz, der in Masse% enthielt: 48 - Titan, 17,4 - Chrom, 14,6 - Kohlenstoff, 10 - Titannitrid, 10 - Nichrom.

Man verdichtete den Einsatz unter einem Druck von 100 kp/cm$^2$, brachte ihn in die Synthesezone ein, entzündete den Einsatz mit nachfolgendem Reagieren der Einsatzkomponenten im Brennregime, führte die Haltezeit im Laufe von 20 s durch und verdichtete die heißen Verbrennungsprodukte unter einem Druck von 1500 kp/cm$^2$ bei einer durchschnittlichen Geschwindigkeit der Druckerhöhung von 800 kp/cm$^2$.s, anschließen, führte man das isobare Halten des verdichteten Produktes im Laufe von 2 min durch.

Die Kennwerte des hergestellten Verbundstoffes sind in der Tabelle 1 angeführt.

Beispiel 5.

Man vermischte den Einsatz, der in Masse% enthielt: 50 - Molybdän, 30 - Silizium, 10 - Nickel und 10 - Aluminium.

Man verdichtete den Einsatz unter einem Druck von 120 kp/cm$^2$, brachte ihn in die Synthesezone ein, entzündete den Einsatz mit nachfolgendem Reagieren der Einsatzkomponenten im Brennregime, führte die Haltezeit im Laufe von 10 s durch und verdichtete die heißen Verbrennungsprodukte unter einem Druck von 3000 kp/cm$^2$ bei einer durchschnittlichen Geschwindigkeit der Druckerhöhung von 20 kp/cm$^2$.s, anschließend führte man das isobare Halten des verdichteten Produktes im Laufe von 5 min durch.

- 23 -

Die Kennwerte des hergestellten Verbundstoffes sind in der Tabelle angeführt.

Beispiel 6.

Man vermischte den Einsatz, der in Masse% enthält: 89,2 - Titan und 10,8 - Bor.

Man verdichtete den Einsatz unter einem Druck von 80 kp/cm$^2$, brachte ihn in die Synthesezone ein, entzündete den Einsatz mit nachfolgendem Reagieren der Einsatzkomponenten im Brennregime, führte die Haltezeit im Laufe von 10 s durch und verdichtete die heißen Verbrennungsprodukte unter einem Druck von 4000 kp/cm$^2$ bei einer durchschnittlichen Geschwindigkeit der Druckerhöhung von 1300 kp/cm$^2$.s, anschließend führte man das isobare Halten unter einem Druck von 4000 kp/cm$^2$ im Laufe von 6 min durch.

Gleich nach der Druckentlastung wurde der heiße Verbundstoff einer Wärmebehandlung im Regime des Relaxationsglühens im Ofen bei Erwärmung bis auf 1000 $^o$C unterzogen, bei dieser Temperatur im Laufe von 6 Std. ausgehalten und zusammen mit dem Ofen abgekühlt.

Die Kennwerte des hergestellten Verbundstoffes sind in der Tabelle angeführt.

Beispiel 7.

Man vermischte den Einsatz, der in Masse% enthielt: 48 - Titan, 12 - Kohlenstoff und 40 -Stahl, der in Masse% enthielt:

1,0-1,2 - Kohlenstoff, 10-13 - Mangan, Rest - Eisen.

Man verdichtete den Einsatz unter einem Druck von 40 kp/cm$^2$, brachte ihn in die Synthesezone ein, entzündete den Einsatz mit nachfolgendem Reagieren der Einsatzkomponenten im Brennregime, führte die Haltezeit im Laufe von 15 s durch und verdichtete die heißen Verbrennungsprodukte unter einem Druck von 2500 kp/cm$^2$ bei einer durchschnittlichen Geschwindigkeit der Druckerhöhung von 1500 kp/cm$^2$.s, anschließend führte man das isobare Halten des verdichteten Produktes unter einem Druck von 2000 kp/cm$^2$ im Laufe von 4 min durch.

Nach der Druckentlastung wurde der Verbundstoff an der Luft abgekühlt.

Nach der Abkühlung wurde der Verbundstoff wärmebehandelt

- 24 -

im Anlaßregime durch Erhitzung im Ofen bis auf eine Temperatur von 920 $^o$C, beim Aushalten bei dieser Temperatur im Laufe von 2 Stunden und einer langsamen Abkühlung zusammen mit dem Ofen.

Die Kennwerte des hergestellten Verbundstoffes sind in der Tabelle angeführt.

Beispiel 8.

Man vermischte den Einsatz, der in Masse% enthielt: 48 - Titan, 12 - Kohlenstoff, 20 - Titannitrid, 15 - Nickel und 5 - Molybdän.

Man verdichtete den Einsatz unter einem Druck von 90 kp/cm$^2$, brachte ihn in die Synthesezone ein, entzündete den Einsatz mit nachfolgendem Reagieren der Einsatzkomponenten im Brennregime, führte die Haltezeit im Laufe von 40 s durch und verdichtete die heißen Brennprodukte unter einen Druck von 600 kp/cm$^2$ bei einer durchschnittlichen Geschwindigkeit der Druckerhöhung von 1100 kp/cm$^2$.s, anschließend führte man das isobare Halten des verdichteten Produktes unter einem Druck von 600 kp/cm$^2$ im Laufe von 3 min durch.

Nach der Druckentlastung wurden die heißen Verbrennungsprodukte im Regime des Härtens durch eine jähe Abkühlung im flüssigen Blei mit einer Temperatur von 340 $^o$C, das Aushalten darin im Laufe von 2 Stunden und die langsame Abkühlung mit einer durchschnittlichen Geschwindigkeit von 500 Grad/Std. an der Luft wärmebehandelt.

Die Kennwerte des hergestellten Verbundstoffes sind in der Tabelle angeführt.

Beispiel 9.

Man vermischte den Einsatz, der in Masse% enthielt: 50 - Molybdän, 30 - Silizium und 20 - Aluminiumoxyd.

Man verdichtete den Einsatz unter einem Druck von 140 kP.cm$^2$, brachte ihn in die Synthesezone ein, entzündete den Einsatz mit nachfolgendem Reagieren der Einsatzkomponenten im Brennregime, führte die Haltezeit im Laufe von 50 s unter einem Druck von 500 kp/cm$^2$ durch und verdichtete die heißen Verbrennungsprodukte unter einem Druck von 1000 kp/cm$^2$ bei einer durchschnittlichen Geschwindigkeit der Druckerhöhung von 900 kp/cm$^2$.s, anschließend führte man das isobare Halten des verdichteten Produktes unter einem Druck von 500 kp/cm$^2$ im Laufe von 18 min durch.

Nach der Druckentlastung wurde der Verbundstoff mit einer durchschnittlichen Geschwindigkeit von 5000 Grad/Std. abgekühlt, dann im Glühverfahren durch Halten im Ofen bei 1000 $^o$C im Laufe von 6 Std. und eine langsame Abkühlung mit dem Ofen wärmebehandelt.

Die Kennwerte des hergestellten Verbundstoffes sind in der Tabelle angeführt.

Beispiel 10.

Man vermischte den Einsatz, der in Masse% enthielt: 63,1 - Titan, 28,4 - Bor, 8 - Kobalt-Kupferlegierung von 0,5 Yttrium.

Man verdichtete den Einsatz unter einem Druck von 250 kp/cm$^2$, brachte ihn in die Synthesezone ein, entzündete den Einsatz mit nachfolgendem Reagieren der Einsatzkomponenten im Brennregime, führte die ganze Haltezeit im Laufe von 3 s unter einem Druck von 10 kp/cm$^2$ durch und verdichtete die heißen Verbrennungsprodukte unter einem Druck von 1500 kp/cm$^2$ bei einer durchschnittlichen Geschwindigkeit der Druckerhöhung von 1800 kp/cm$^2$.s, anschließend führte man das isobare Halten des verdichteten Produktes unter einem Druck von 1500 kp/cm$^2$ im Laufe von 10 s durch.

Nach der Druckentlastung wurde der heiße Verbundstoff im Anlaßregime mit einer durchschnittlichen Geschwindigkeit der Abkühlung von 10 Grad/Std. wärmebehandelt.

Die Kennwerte des hergestellten Verbundstoffes sind in der Tabelle angeführt.

Beispiel 11.

Man vermischte den Einsatz, der in Masse.% enthielt: 48 - Titan, 17,4 - Chrom, 14,6 - Kohlenstoff und 20 - Stahl, der in Masse.% enthielt: 16-20 - Chrom, 12-16 - Nickel, 0,05 - 0,1 - Kohlenstoff, Rest - Eisen.

Man verdichtete den Einsatz unter einem Druck von 300 kp/cm$^2$, brachte ihn in die Synthesezone ein, entzündete den Einsatz mit nachfolgendem Reagieren der Einsatzkomponenten im Brennregime, führte die ganze Haltezeit im Laufe von 60 s unter einem Druck von 1000 kp/cm$^2$ durch und verdichtete die

- 26 -

heißen Verbrennungsprodukte unter einem Druck von 2500 kp/cm$^2$ bei einer durchschnittlichen Geschwindigkeit der Druckerhöhung von 450 kp/cm$^2$.s, anschließend führte man das isobäre Halten des verdichteten Produktes unter einem Druck von 2500 kp/cm$^2$ im Laufe von 3 min durch.

Nach der Druckentlastung wurde der hergestellte Verbundstoff an der Luft abgekühlt, dann wurde er im Anlaßregime durch Erhitzung bis auf eine Temperatur von 700 $^{o}$C wärmebehandelt, im Laufe von 3 Stunden ausgehalten und mit einer durchschnittlichen Geschwindigkeit von 200 Grad/Std. abgekühlt.

Die Kennwerte des hergestellten Verbundstoffes sind in der Tabelle angeführt.

Beispiel 12.

Man vermischte den Einsatz, der in Masse.% enthielt: 71,4 - Titan, 7,8 - Bor, 10,3 - Kohlenstoff und 5,5 - Vanadiumkarbid.

Man verdichtete den Einsatz unter einem Druck von 130 kp/cm$^2$, brachte ihn in die Synthesezone ein, entzündete den Einsatz mit nachfolgendem Reagieren der Einsatzkomponenten im Brennregime, führte die Haltezeit im Laufe von 50 s durch, wobei man die Entzündung des Einsatzes und das Anfangsstadium des Haltens im Laufe von 15 s unter einem Druck von 400 kp/cm$^2$ durchführte, danach verdichtete man die heißen Verbrennungsprodukte unter einem Druck von 1800 kp/cm$^2$ bei durchschnittlichen Geschwindigkeit der Druckerhöhung von 700 kp/cm$^2$.s, anschließend führte man das isobare Halten des verdichteten Produktes unter einem Druck von 400 kp/cm$^2$ im Laufe von 7 min durch.

Die Kennwerte des hergestellten Verbundstoffes sind in der Tabelle angeführt.

Beispiel 13.

Man vermischte den Einsatz, der in Masse.% enthielt: 9,8 - Zirkon, 62,2 - Tantal, 9 - Kohlenstoff und 19 - Kobalt.

Man verdichtete den Einsatz unter einem Druck von 190 kp/cm$^2$ und brachte ihn in die Synthesezone ein. Vor der Entzündung des Einsatzes wurde er bis auf 800 $^{o}$C mittels

- 27 -

eines Plasmabrenners erhitzt.

Dann entzündete man den Einsatz mit nachfolgendem Reagieren der Einsatzkomponenten im Brennregime, führte die Haltezeit im Laufe von 40 s durch, dabei entzündete man den Einsatz und führte das Anfangsstadium des Haltens im Laufe von 20 s unter einem Druck von 1000 $kp/cm^2$ durch, dann verdichtete man die heißen Verbrennungsprodukte unter einem Druck von 3000 $kp/cm^2$ bei einer durchschnittlichen Geschwindigkeit der Druckerhöhung von 90 $kp/cm^2.s$, anschließend führte man das isobare Halten des verdichteten Produktes unter einem Druck von 3000 $kp/cm^2$ im Laufe einer Minute durch.

Die Kennwerte des hergestellten Verbundstoffes sind in der Tabelle angeführt.

Beispiel 14.

Man vermischte den Einsatz, der in Masse.% enthielt: 71,4 - Titan, 8,6 - Bor und 20 - Zirkoniumnitrid.

Man verdichtete den Einsatz unter einem Druck von 240 $kp/cm^2$, brachte ihn in eine poröse wärmeisolierende Hülle und danach in die Synthesezone ein.

Man erhitzte den Einsatz vor dessen Entzundung bis auf eine Temperatur von 100 $^oC$, indem man den elektrischen Strom direkt durchleiten ließ.

Danach entzündete man den Einsatz mit nachfolgendem Reagieren der Einsatzkomponenten im Brennregime, führte die Haltezeit im Laufe von 120 s durch, dabei entzündete man den Einsatz und führte das Anfangsstadium des Haltens im Laufe von 40 s unter einem Druck von 10 $kp/cm^2$ durch, dann verdichtete man die heißen Verbrennungsprodukte unter einem Druck von 2500 $kp/cm^2$ bei einer durchschnittlichen Geschwindigkeit der Druckerhöhung von 1800 $kp/cm^2.s$, anschließend führte man das isobare Halten des verdichteten Produktes unter einem Druck von 2500 $kp/cm^2$ im Laufe von 8 min durch.

Die Kennwerte des hergestellten Verbundstoffes sind in der Tabelle angeführt.

Beispiel 15.

Man vermischte den Einsatz, der in Masse% enthielt: 84,4 - Tantal, 5,6 - Kohlenstoff und 10 - Kupfertantal.

Man verdichtete den Einsatz unter einem Druck von 140 $kp/cm^2$, brachte ihn in eine poröse wärmeisolierende

- 28 -

Hülle, die eine offene Porosität von 60 % aufweist, und danach in die Synthesezone ein.

Vor der Entzündung des Einsatzes wurde er mit Hilfe eines Induktors bis auf eine Temperatur von 1200 $^{o}$C erhitzt, dann entzündete man den Einsatz mit nachfolgendem Reagieren der Einsatzkomponenten im Brennregime, führte die Haltezeit im Laufe von 130 s durch, dann verdichtete man die heißen Verbrennungsprodukte unter einem Druck von 3000 kp/cm$^2$ bei einer durchschnittlichen Geschwindigkeit der Druckerhöhung von 1300 kp/cm$^2$.s. Anschließend führte man das isobare Halten des verdichteten Produktes unter einem Druck von 1300 kp/cm$^2$ im Laufe von 15 min durch.

Die Kennwerte des hergestellten Verbundstoffes sind in der Tabelle angeführt.

Beispiel 16.

Man vermischte den Einsatz, der in Masse.% enthielt: 40,47 - Titanspäne, 9,92 - Kohlenstoff, 41,46 - Nickel, 8,15 - Molybdän.

Man verdichtete den Einsatz unter einem Druck von 90 kp/cm$^2$, brachte ihn in eine poröse wärmeisolierende Hülle, die eine offene Porosität von 30% aufweist, und dann in die Synthesezone ein. Man entzündete den Einsatz mit nachfolgendem Reagieren der Einsatzkomponenten im Brennregime, führte die Haltezeit im Laufe von 40 s durch und verdichtete die heißen Verbrennungsprodukte unter einem Druck von 1100 kp/cm$^2$ bei einer durchschnittlichen Geschwindigkeit der Druckerhöhung von 350 kp/cm$^2$.s. Anschließend führte man das isobare Halten des verdichteten Produktes unter einem Druck von 1100 kp/cm$^2$ im Laufe von 3 min durch.

Die Kennwerte des hergestellten Verbundstoffes sind in der Tabelle angeführt.

Beispiel 17.

Man vermischte den Einsatz, der in Masse.% enthielt: 71,39 - Abfälle des Schleifens von Titanlegierungen, 7,83 - - Bor, 10,28 - Abfälle des Kohlenstoffes und 10,5 - des Eisens.

Man verdichtete den Einsatz unter einem Druck von 160 kp/cm$^2$, brachte ihn in die Synthesezone ein, entzündete den Einsatz mit nachfolgendem Reagieren der Einsatzkomponenten im Brennregime, führte die Haltezeit im Laufe von 8 s durch und verdichtete die heißen Verbrennungsprodukte unter einem Druck von 1400 $kp/cm^2$ bei einer durchschnittlichen Geschwindigkeit der Druckerhöhung von 50 $kp/cm^2.s$, anschließend führte man das isobare Halten des verdichteten Produktes unter einem Druck von 1400 $kp/cm^2$ im Laufe einer Minute durch.

Die Kennwerte des hergestellten Verbundstoffes sind in der Tabelle angeführt.

Beispiel 18.

Man vermischte den Einsatz, der in Masse.% enthielt: 15,30 - Titanabfälle beim Schleifen, 25,17 - Abfälle des Schleifens von Titanlegierungen, 9,92 - Kohlenstoff und 49,61 - Abfälle des Schleifens von Stahl, der in Masse.% enthielt: Kohlenstoff - 0,2-0,4, Chrom - 1,2-1,4, Mangan - - 1,2-1,4, Silizium -1,2-1,4, Eisen - Rest.

Man verdichtete den Einsatz unter einem Druck von 190 $kp/cm^2$, brachte ihn in die Synthesezone ein, entzündete den Einsatz mit nachfolgendem Reagieren der Einsatzkomponenten im Brennregime, führte die Haltezeit im Laufe von 30 s durch und verdichtete die heißen Verbrennungsprodukte unter einem Druck von 1900 $kp/cm^2$ bei einer durchschnittlichen Geschwindigkeit der Druckerhöhung von 90 $kp/cm^2.s$. Anschließend führte man das isobare Halten des verdichteten Produktes unter einem Druck von 1900 $kp/cm^2$ im Laufe von 1,5 min. durch.

Die Kennwerte des hergestellten Verbundstoffes sind in der Tabelle angeführt.

Beispiel 19.

Man vermischte den Einsatz, der in Masse.% enthielt: 48 - Titan, 17,4 - Chrom, 14,6 - Kohlenstoff und 20 - Stahl, der in Masse.% enthielt: 16-20 - Chrom, 7-10 - Nickel, 0,5-0,8 - Titan , Rest - Eisen.

Man verdichtete den Einsatz unter einem Druck von 180 $kp/cm^2$ und brachte ihn in die Synthesezone ein, die man bis zu einem Restdruck von $10^{-1}$ mm QS vakuumierte.

Danach entzündete man den Einsatz mit dem nachfolgenden Reagieren der Einsatzkomponenten im Brennregime, führte die Haltezeit im Laufe von 5 s durch und verdichtete die heißen Verbrennungsprodukte unter einem Druck von 3600 kp/cm$^2$ bei einer durchschnittlichen Geschwindigkeit der Druckerhöhung von 200 kp/cm$^2$.s, anschließend führte man das isobare Halten des verdichteten Produktes unter einem Druck von 3600 kp/cm$^2$ im Laufe von 60 s durch.

Die Kennwerte des hergestellten Verbundstoffes sind in der Tabelle angeführt.

Beispiel 20.

Man vermischte den Einsatz, der in Masse.% enthielt: 89,2 - Titan und 10,8 - Bor.

Man formte den Einsatz in Form von Zylinderproben (Rundproben) mit einem Durchmesser von 500 mm und einer Höhe von 100 mm, dann brachte man ihn in die Synthesezone ein, die man bis auf einem Restdruck von 10$^{-2}$ mm QS vakuumierte, man entzündete den Einsatz mit nachfolgendem Reagieren des Einsatzkomponenten im Brennregime, führte die Haltezeit im Laufe von 2 min durch und verdichtete die heißen Verbrennungsprodukte unter einem Druck von 900 kp/cm$^2$ bei einer durchschnittlichen Geschwindigkeit der Druckerhöhung von 300 kp/cm$^2$.s. Anschließend führte man das isobare Halten des verdichteten Produktes unter einem Druck von 900 kP/cm$^2$ im Laufe von 6 min durch.

Die Kennwerte des hergestellten Verbundstoffes sind in der Tabelle angeführt.

Beispiel 21.

Man vermischte den Einsatz, der in Masse.% enthielt: 50 - Molybdän, 30 - Silizium und 20 - Aluminiumoxyd.

Man formte den Einsatz in Form einer sechskantigen Platte mit einer relativen Dichte von 50%, dann brachte man ihn in die Synthesezone ein, entzündete den Einsatz mit nachfolgendem Reagieren der Einsatzkomponenten im Brennregime, führte die Haltezeit im Laufe von 4 min durch und verdichtete die heißen Verbrennungsprodukte unter einem Druck von 2900 kp/cm$^2$ bei einer durchschnittlichen Geschwindigkeit der Druckerhöhung von 40 kp/cm$^2$.s. Anschließend führte man das isobare Halten des verdichteten Produktes unter einem Druck von 2900 kp/cm$^2$ im Laufe von 10 min durch.

- 31 -

Die Kennwerte des hergestellten Verbundstoffes sind in der Tabelle angeführt.

Beispiel 22.

Man vermischte den Einsatz, der in Masse.% enthielt: 84,4 - Tantal, 5,6 - Kohlenstoff und 10 - Stahl, der in Masse-% enthielt: 16-20 - Chrom, 12-16 - Nickel, 0,05-0,1 - Kohlenstoff, Rest - Eisen.

Man verdichtete den Einsatz bis auf die relative Dichte von 90% und brachte ihn in die Synthesezone ein, entzündete ihn mit nachfolgendem Reagieren der Einsatzkomponenten im Brennregime, führte die Haltezeit im Laufe von 40 s durch und verdichtete die heißen Verbrennungsprodukte unter einem Druck von 3000 kp/cm$^2$ bei einer durchschnittlichen Geschwindigkeit der Druckerhöhung von 80 kp/cm$^2$.s. Anschließend führte man das isobare Halten des verdichteten Produktes unter einem Druck von 3000 kp/cm$^2$ im Laufe von 8 min durch. Dabei wurde die Haltezeit, die Verdichtung der heißen Brennprodukte und das isobare Halten in einem Ultraschallfeld durchgeführt.

Die Kennwerte des hergestellten Verbundstoffes sind in der Tabelle abgeführt.

Beispiel 23.

Man vermischte den Einsatz, der in Masse.% enthielt: 48 - Titan, 12 - Kohlenstoff und 40 Nickel.

Man verdichtete den Einsatz bis auf eine relative Dichte von 20%, brachte ihn in die Synthesezone ein, entzündete mit Hilfe einer Wolframspirale mit nachfolgendem Reagieren der Einsatzkomponenten im Brennregime, führte die Haltezeit im Laufe von 20 s durch und verdichtete die heißen Verbrennungsprodukte unter einem Druck von 1000 kp/cm$^2$ bei einer durchschnittlichen Geschwindigkeit der Druckerhöhung von 100 kp/cm$^2$.s. Anschließend führte man das isobare Halten des verdichteten Produktes unter einem Druck von 1000 kp/cm$^2$ im Laufe von 1 min durch.

Die Kennwerte des hergestellten Verbundstoffes sind in der Tabelle angeführt.

Beispiel 24.

Man vermischte den Einsatz, der in Masse.% enthielt:

64 - Titan, 16 - Kohlenstoff und 20 - Kobalt.

Man verdichtete den Einsatz unter einem Druck von 200 kp/cm$^2$, brachte ihn in die Synthesezone ein, auf die Oberfläche des Einsatzes brachte man eine perforierte Schicht aus einem wärmebeständigen Stoff und ein Zündmittel (ein Gemisch, das in Masse.% enthielt: Ti-64, C-16, Til-20) auf, dessen Brenngeschwindigkeit der Brenngeschwindigkeit des Einsatzes gleich ist, entzündete den Einsatz mit Hilfe des Zündsatzes. Die Entzündung des Zündsatzes erfolgte mittels einer Graphitelektrode mit nachfolgendem Reagieren der Einsatzkomponenten im Brennregime, man führte die Haltezeit im Laufe von 10 s durch und verdichtete die heißen Verbrennungsprodukte unter einem Druck von 1000 kp/cm$^2$ bei einer durchschnittlichen Geschwindigkeit der Druckerhöhung von 60 kp/cm$^2$.s, anschließend führte man das isobare Halten des verdichteten Produktes unter einem Druck von 1000 kp/cm$^2$ im Laufe von 2 min durch.

Die Kennwerte des hergestellten Verbundstoffes sind in der Tabelle angeführt.

Beispiel 25.

Man vermischte den Einsatz, der in Masse.% enthielt: 47,9 - Titan, 21,6 - Bor und 20,5 - Stahl, der in Masse.% enthielt: Chrom - 16-20; Nickel - 9-11, Titan - 0,5-0,8, Kohlenstoff - 0,05 - 0,1, Eisen - Rest.

Man verdichtete den Einsatz unter einem Druck von 110 kp/cm$^2$, brachte ihn in die Synthesezone ein, führte man in ihr Gasableitungskanäle aus, deren Volumen 60% von dem Volumen des Einsatzes ausmachte, entzündete den Einsatz mit Hilfe einer induktiven Erwärmung mit nachfolgendem Reagieren der Einsatzkomponenten im Brennregime, führte die Haltezeit im Laufe von 30 s durch und verdichtete die heißen Verbrennungsprodukte unter einem Druck von 600 kp/cm$^2$ bei einer durchschnittlichen Geschwindigkeit der Druckerhöhung von 70 kp/cm$^2$.s. Anschließend führte man das isobare Halten des verdichteten Produktes unter einem Druck von 600 kp/cm$^2$ im Laufe von 3 min durch.

Die Kennwerte des hergestellten Verbundstoffes sind in der Tabelle angeführt.

Beispiel 26.

Man vermischte den Einsatz, der in Masse.% enthielt:
64 - Titan, 16 - Kohlenstoff und 20 - Nickel.

Man verdichtete den Einsatz unter einem Druck von
180 kp/cm$^2$, brachte ihn in die Synthesezone ein, führte man
in ihr Gasableitungskanäle aus, deren Volumen 30% von dem
Volumen des Einsatzes ausmachte, entzündete den Einsatz mit
Hilfe eines Laserstrahls mit nachfolgendem Reagieren der
Einsatzkomponenten im Brennregime, führte die Haltezeit im
Laufe von 50 s durch und verdichtete die heißen Verbrennungsprodukte unter einem Druck von 4000 kp/cm$^2$ bei einer
durchschnittlichen Geschwindigkeit der Druckerhöhung von
560 kp/cm$^2$.s. Anschließend führte man das isobare Halten
des verdichteten Produktes unter einem Druck von 4000 kp/cm$^2$
im Laufe von 2,5 min durch.

Die Kennwerte des hergestellten Verbundstoffes sind in
der Tabelle angeführt.

Beispiel 27.

Man vermischte den Einsatz, der in Masse.% enthielt:
32 - Titan, 8 - Kohlenstoff, 50 - Nickel und 10 - Molybdän.

Man verdichtete den Einsatz unter einem Druck von
360 kp/cm$^2$, brachte ihn in die Synthesezone ein, entzündete
den Einsatz mit Hilfe des Ultraschalls mit nachfolgendem
Reagieren der Einsatzkomponenten im Brennregime, führte
die Haltezeit im Laufe von 70 s durch und verdichtete die
heißen Verbrennungsprodukte unter einem Druck von 2000 kp/cm$^2$
bei einer durchschnittlichen Geschwindigkeit der Druckerhöhung
von 700 kp/cm$^2$.s. Anschließend führte man das isobare Halten des verdichteten Produktes unter einem Druck von
2000 kp/cm$^2$ im Laufe von 7 min durch.

Die Kennwerte des hergestellten Verbundstoffes sind in
der Tabelle angeführt.

Beispiel 28.

Man vermischte den Einsatz, der in Masse.% enthielt:
48 - Titan, 12 - Kohlenstoff, 10 - Titannitrid und 30 -
- Nickel.

Man verdichtete den Einsatz unter einem Druck von
110 kp/cm$^2$, brachte ihn in die Synthesezone ein, auf die

- 34 -

Oberfläche des Einsatzes brachte man eine perforierte
Schicht aus wärmebeständigem Stoff auf, auf die man ein
Zündmittel (ein Gemisch, das in Masse.% enthielt:
69 - Titan, 31 - Bor) legte, dessen Brenngeschwindigkeit
viermal so hoch war wie die Brenngeschwindigkeit des Einsatzes, man entzündete den Einsatz mit nachfolgendem Reagieren der Einsatzkomponenten im Brennregime, führte die
Haltezeit im Laufe von 15 s durch und verdichtete die heißen
Verbrennungsprodukte unter einem Druck von 1500 $kp/cm^2$ bei
einer durchschnittlichen Geschwindigkeit der Druckerhöhung
von 800 $kp/cm^2$.s. Anschließend führte man das isobare Halten des verdichteten Produktes unter einem Druck von 1500 $kp/cm^2$
im Laufe von 50 s durch.

Die Kennwerte des hergestellten Verbundstoffes sind in
der Tabelle angeführt.

Beispiel 29.

Zum Vergleich wird ein Beispiel des Verfahrens zur
Herstellung eines Hartmetallstoffes, ausgeführt nach EP
0165707 A2, dargestellt.

Man vermischte den Einsatz, der in Masse.% enthielt:
Titan - 76,87, Bor - 23,13.

Man verdichtete den Einsatz unter einem Druck von
2000 $kp/cm^2$ in einer Preßform.

Während der Verdichtung formte man den Einsatz zu Zylindern mit einem Durchmesser von 5 mm und einer Höhe von
5 mm.

Danach brachte man den verdichteten Einsatz in eine aus
Bornitrid hergestellte Hülle ein, die man in einem mit einem Graphitheizelement ausgestatteten Höchstdruckapparat
unterbrachte.

Danach entzündete man den Einsatz mit Hilfe dieses
Graphitheizelementes, gleichzeitig legte man an den Einsatz
einen Druck von 30000 atm. an.

Die Kennwerte des hergestellten hartlegierten Stoffes
sind in der Tabelle angeführt.

Für alle Beispiele wurden folgende Kennwerte der Verbundstoffe, die man nach der beschriebenen Technologie,
erhielt, bestimmt:

Homogenität nach der chemischen Zusammensetzung und Homogenität nach der Dichte des Verbundstoffes.

Die Homogenität wurde nach der folgenden Formel bestimmt:

$$K = \sqrt{\frac{\sum\limits_{i=1}^{n}(C - C_i)^2}{n - 1}} \quad ,$$

worin bedeuten:

K - Inhomogenitätskoeffizient des Verbundstoffes;

C - Durchschnittswert der Eigenschaft (z.B. Titangehalt bzw. Dichte des Verbundstoffes nach dem Volumen des Verbundstoffes nach den Resultaten sämtlicher Messungen;

$C_i$ - Wert der entsprechenden Eigenschaft bei einer konkreten Messung;

n - Anzahl der Messungen.

Tabelle

| Nr. des Beispiels | Verfahren zur Herstellung des Verbundstoffes | Inhomogenitäts koeffizient des Verbundstoffes nach der chemischen Zusammensetzung | Inhomogenitätskoeffizient des Verbundstoffes nach der Dichte |
|---|---|---|---|
| 1 | 2 | 3 | 4 |
| 1. | Beanspruchtes | 0,11 | 0,09 |
| 2. | -"- | 0,13 | 0,17 |
| 3. | -"- | 0,09 | 0,10 |
| 4. | -"- | 0,07 | 0,05 |
| 5. | -"- | 0,05 | 0,12 |
| 6. | -"- | 0,08 | 0,06 |
| 7. | -"- | 0,14 | 0,10 |
| 8. | -"- | 0,12 | 0,11 |
| 9. | -"- | 0,15 | 0,15 |
| 10. | -"- | 0,10 | 0,09 |
| 11. | -"- | 0,05 | 0,05 |
| 12. | -"- | 0,07 | 0,10 |
| 13. | -"- | 0,15 | 0,16 |
| 14. | -"- | 0,09 | 0,09 |
| 15. | -"- | 0,13 | 0,15 |
| 16. | -"- | 0,13 | 0,17 |
| 17. | -"- | 0,15 | 0,13 |
| 18. | -"- | 0,10 | 0,09 |
| 19. | -"- | 0,06 | 0,05 |
| 20. | -"- | 0,05 | 0,05 |
| 21. | -"- | 0,17 | 0,15 |
| 22. | -"- | 0,12 | 0,11 |

Fortsetzung der Tabelle

| 1 | 2 | 3 | 4 |
|---|---|---|---|
| 23. | –"– | 0,05 | 0,05 |
| 24. | –"– | 0,05 | 0,05 |
| 25. | –"– | 0,08 | 0,09 |
| 26. | –"– | 0,05 | 0,05 |
| 27. | –"– | 0,05 | 0,05 |
| 28. | –"– | 0,13 | 0,11 |
| 29. | Prototyp | 0,43 | 0,37 |

Der kleinste Wert des Inhomogenitatskoeffizienten (0,05) wird durch die Genauigkeit der angewandten Analysemethoden bestimmt.

Wie aus der angeführten Tabelle zu ersehen ist, besitzt der nach dem beanspruchten Verfahren hergestellte Verbundstoff eine hohe Homogenität nach der chemischen Zusammensetzung und der Dichte.

Gewerbliche Verwertbarkeit

Die vorliegende Erfindung kann am effektivsten in der Hüttenindustrie, im Werkzeugmaschinenbau, in der elektrotechnischen Industrie zur Herstellung von Schneidwerkzeugen, Hartmetallausrüstungen, Gesenken und anderen Erzeugnissen aus dem nach dem erfindungsgemäßen Verfahren hergestellten Verbundstoff angewendet werden.

- 37 -

PATENTANSPRÜCHE

1. Verfahren zur Herstellung des Verbundstoffes, das die Aufbereitung des Einsatzes, der zumindest ein metallisches Element der Gruppen III-VI, VIII des Periodischen Systems und zumindest eine Verbindung mindestens eines der Elemente der genannten Gruppen, einzeln oder in Kombination genommen, zumindest ein nichtmetallisches Element der Gruppen III-VI des Periodischen Systems und zumindest eine Verbindung mindestens eines der Elemente der genannten Gruppen, einzeln oder in Kombination genommen, und ein Bindemittel enthält, die Verdichtung des Einsatzes, das Einbringen der Einsatzes in die Synthesezone, dessen Entzündung mit nachfolgendem Reagieren der Einsatzkomponenten im Brennregime, die Verdichtung der heißen Berbrennungsprodukte mit der Gewinnung des Zielverbundproduktes einschließt, dadurch g e - k e n n z e i c h n e t, daß man den Einsatz nach der Entzündung bis zur Vereichtung der Verbrennungsprodukte im Laufe von ca. 0,1 s bis etwa 0,5 Std. abstehen läßt und die Verdichtung der heißen Verbrennungsprodukte unter einem Druck bei einer durchschnittlichen Geschwindigkeit der Druckerhöhung von ca. 10 bis etwa 2000 $kg/cm^2$ mit dem nachfolgenden Aushalten des verdichteten Produktes unter den isobaren Bedingungen bis zur vollständigen Homogenisierung des Verbundstoffes und dessen nachfolgende Abkühlung durchführt.

2. Verfahren nach Anspruch 1, dadurch g e k e n n - z e i c h n e t daß nach der Homogenisierung, jedoch vor der Abkühlung des Verbundstoffes dieser wärmebehandelt wird.

3. Verfahren nach Anspruch 1, dadurch g e k e n n - z e i c h n e t, daß man den Verbundstoff nach der Abkühlung einer Wärmebehandlung unterzieht.

4. Verfahren nach Anspruch 2 oder 3, dadurch g e - k e n n z e i c h n e t, daß der gewonnene Verbundstoff mit einer durchschnittlichen Geschwindigkeit von ca. 10 bis etwa 5000 Grad/Std. abgekühlt wird.

5. Verfahren nach Anspruch 1, dadurch g e k e n n - z e i c h n e t, daß zumindest im Augenblick der Einsatzentzündung und im Anfangsstadium des Aushaltens vor der Verdichtung der Verbrennungsprodukte ein Druck von ca. 10 bis

etwa 1000 kp/cm$^2$ erzeugt wird.

6. Verfahren nach Anspruch 5, dadurch g e k e n n - z e i c h n e t, daß man den genannten Druck im Laufe der gesamten Aushaltezeit vor der Verdichtung der Brennprodukte aufrechterhält.

7. Verfahren nach Anspruch 1, dadurch g e k e n n - z e i c h n e t, daß vor der Entzündung des Einsatzes dieser durch eine äußere Energiequelle bis auf eine Temperatur von ca. 100 bis etwa 1200 $^{o}$C erwärmt wird.

8. Verfahren nach Anspruch 1, dadurch g e k e n n - z e i c h n e t, daß man den Einsatz nach dessen Verdichtung in einer porösen wärmeisolierenden Hülle unterbringt.

9. Verfahren nach Anspruch 8, dadurch g e k e n n - z e i c h n e t, daß die wärmeisolierende Hülle eine offene Porösität hat, wobei das Volumen der offenen Porösität etwa 60% und weniger von dem Volumen der wärmeisolierenden Hülle beträgt.

10. Verfahren nach Anspruch 1 oder 9, dadurch g e - k e n n z e i c h n e t, daß vor der Entzündung des Einsatzes die Synthesezone bis zu einem Restdruck von etwa 10$^{-1}$ mm QS und weniger vakuumiert wird.

11. Verfahren nach Anspruch 1, dadurch g e k e n n - z e i c h n e t, daß man den Einsatz bis zu einer relativen Dichte von ca. 20 bis etwa 90% verdichtet.

12. Verfahren nach Anspruch 11, dadurch g e k e n n - z e i c h n e t, daß man den Einsatz während des Verdichtungsprozesses formt.

13. Verfahren nach Anspruch 1, dadurch g e k e n n - z e i c h n e t, daß man das Halten vor der Verdichtung der heißen Verbrennungsprodukte, deren Verdichtung und das Aushalten des verdichteten Produktes unter den isobaren Bedingungen in einem Ultraschallfeld durchführt.

14. Verfahren nach Anspruch 1, dadurch g e k e n n - z e i c h n e t, daß man den Einsatz mit Hilfe des Ultraschalls entzündet.

15. Verfahren nach Anspruch 1, dadurch g e k e n n - z e i c h n e t, daß man auf der Oberfläche des Einsatzes in der Synthesezone eine perforierte Schicht aus einem thermo-

stabilen Stoff unterbringt, auf der man ein Zündmittel anordnet, dessen Brenngeschwindigkeit der Brenngeschwindigkeit des Einsatzes gleich ist oder diese übertrifft, unterbringt, dabei wird die Entzündung des Einsatzes mit Hilfe des Zündmittels durchgeführt.

16. Verfahren nach Anspruch 1, dadurch g e k e n n - z e i c h n e t, daß man im Einsatz vor dessen Entzündung Gasableitungskanäle ausführt, deren Volumen etwa 60% und weniger von dem Volumen des Einsatzes ausmacht.

17. Verfahren nach Anspruch 1, dadurch g e k e n n - z e i c h n e t, daß man als metallisches Element Abfälle des Metalls der Gruppen III-VI, VIII des Periodischen Systems und/oder dessen Legierung verwendet.

18. Verfahren nach Anspruch 1, dadurch g e k e n n - z e i c h n e t, daß man als nichtmetallisches Element das nichtmetallische Element der Gruppen III-VI des Periodischen Systems, das zu den Abfällen des Produktionsprozesses gelangt, verwendet.

19. Verfahren nach Anspruch 1, dadurch g e k e n n - z e i c h n e t, daß man als Binderkomponente eine Binderkomponente, die zu den Abfällen des Produktionsprozesses gelangt, verwendet.

# INTERNATIONAL SEARCH REPORT

International Application No  PCT/SU 88/00270

**I. CLASSIFICATION OF SUBJECT MATTER** (if several classification symbols apply, indicate all) *

According to International Patent Classification (IPC) or to both National Classification and IPC

Int. CL.$^5$  C 22 C 1/05

**II. FIELDS SEARCHED**

Minimum Documentation Searched [7]

| Classification System | Classification Symbols |
|---|---|
| Int. Cl.$^4$ | C 22 C 1/05, C 04 B 35/56, 35/58, B 22 F 3/14 |

Documentation Searched other than Minimum Documentation
to the Extent that such Documents are Included in the Fields Searched [8]

**III. DOCUMENTS CONSIDERED TO BE RELEVANT [9]**

| Category * | Citation of Document, [11] with Indication, where appropriate, of the relevant passages [12] | Relevant to Claim No. [13] |
|---|---|---|
| A | Fizicheskaya khimia. Sovremennye problemy, 1983, "Khimia" (Moscow), pages 40-41 | 1-19 |
| | -- | |
| A,E | Samorasprostranyajuschiisya vysokotemperaturny sintez, (Sbornik annotatsy), MNTK "Termosintez", Institut strukturnoi makrokinetiki AN SSSR Nr. 1, 1989, page 13, Nr. 23; page 20, Nr. 38 | 17-18 <br> 1;5-6;12 |
| | -------------- | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 28 June 1989 (28.06.89) | 13 September 1989 (13.09.89) |
| International Searching Authority <br><br> ISA/SU | Signature of Authorized Officer |